# EUROPEAN PATENT APPLICATION

(11) **EP 0 613 917 A1**
(43) Date of publication of application: **07.09.1994**
(21) Application number: 94200455.7
(22) Date of filing: 23.02.1994
(51) Int. Cl.: C08G 69/18, C08G 69/16, C08G 18/80

(54) **Process for the preparation of nylon block copolymer**

(30) Priority: 01.03.1993 BE 9300188
(71) Applicant: DSM N.V., NL-6411 TE Heerlen (NL)
(72) Inventor: Van Geenen, Albert Arnold, NL-6441 KM Brunssum (NL); Kerssemakers, Arnoldus Maria, NL-6325 DB Valkenburg aan de Geul (NL)

(57) **Abstract**

A process for the preparation of a nylon block copolymer involves introducing two or more reaction streams consisting of molten lactam and having a temperature of 68-95°C into a mold having a temperature of 100-180°C, wherein the reaction streams contain one or more polyols and/or polyamines, lactam blocked polyisocyanates and a catalyst, the catalyst and the polyisocyanate are in different streams and the catalyst-containing reaction stream contains, besides sodium lactamate or potassium lactamate, a Lewis acid. A faster reaction rate during the RIM process is obtained as a result of the presence of a Lewis acid in addition to sodium lactamate or potassium lactamate.

## Description

### FIELD OF THE INVENTION

The invention relates to a process for preparing a nylon block copolymer in which two or more reaction streams containing molten lactam and having a temperature of 68-95°C are introduced into a mold having a temperature of 100-180°C. When combined, the reaction streams contain one or more polyols, lactam blocked polyisocyanates and catalyst, with the proviso that the catalyst and the lactam blocked polyisocyanate are in different reaction streams before being introduced into the mold.

### BACKGROUND OF the INVENTION

In a process described in NL-A-8702950, a prepolymer consisting of the reaction product of a polyol with a lactam blocked polyisocyanate is prepared immediately after mixing the reaction streams and a nylon block copolymer is thereafter formed. If the catalyst is sodium or potassium lactamate, the formation of the prepolymer proceeds slowly whereas the formation of nylon proceeds rapidly. This results in an inhomogeneous product having with moderate impact resistance. When a Grignard compound (Lewis acid) is the catalyst, the formation of prepolymer proceeds rapidly whereas the formation of nylon proceeds slowly. This causes the reaction time to be too long for, for instance, a RIM process (RIM = Reaction Injection Molding).

Other low or only moderate impact resistant products are described in G.B. 1,067,153 and G.B. 1,099,265.

The art has long sought a facile process which proceeds rapidly to a homogeneous nylon block copolymer having good homogeneity and improved impact resistance.

### SUBJECT AND OBJECTS OF THE INVENTION

The present invention comprises a facile, and reproducible process for rapidly preparing nylon block copolymers which have good homogeneity and improved impact resistance. In the present process the reaction proceeds rapidly under mild temperature and pressure conditions.

To this end, two or more reaction streams, each having a temperature of 68-95°C, preferably 75-90°C, are combined in a mold having a temperature of 100-180°C. One of the reaction streams contains, in addition to a sodium lactamate or potassium lactamate catalyst, a Lewis acid. A prepolymer is formed at about 68-95°C by the reaction between at least one polyol and/or at least one polyamine and lactam-blocked polyisocyanate under the influence of the Lewis acid. The nylon block copolymer is thereafter formed at a temperature of 100-180°C with the aid of an alkali metal lactamate, such as sodium lactamate or potassium lactamate, as a catalyst in the presence of a Lewis acid. A nylon block copolymer with excellent impact resistance is obtained. The at least one polyol and/or the at least one polyamine is homogeneously distributed throughout the nylon matrix.

### DETAILED DESCRIPTION OF THE PROCESS

A process for preparing a nylon block copolymer comprises introducing at least two reaction streams having a temperature of 68-95°C into a mold having a temperature of 100-180°C, preferably 135-160°C. The reaction streams contain at least one lactam, at least one lactam blocked polyisocyanate and a catalyst wherein the catalyst and the polyisocyanate are in different reaction streams, and the catalyst-containing reaction stream contains an alkali metal lactamate, such as sodium lactamate or potassium lactamate, and a Lewis acid.

In the process according to the present invention, polyols according to the following general formula are used:

R-(-OH)ₓ

where x is a figure greater than or equal to 2, preferably 2 to 4, and R represents a polysiloxane group, a hydrocarbon group (preferably with a molecular weight of not less than 100), a polyether group, or polyester group. By preference, R is a hydrocarbon group, a polyether group or a polyester group.

The molecular weights of polymers or polymer segments given herein refers, unless stated otherwise, to the number average molecular weight, which may be determined by known techniques such as gel-phase chromatography.

Polysiloxane groups and polysiloxane segments include groups or segments containing not less than about 50 per cent by weight of one or more units of the following formula: 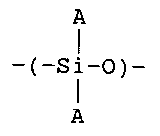
where A represents methyl or phenyl.

Polysiloxane groups or polysiloxane segments usually contain other groups such as ether groups with lower alkyls such as ethane or methane. Such ether groups often are terminal groups on the chain of the repeating siloxane units. These ether groups can account for up to 50 per cent by weight of the polysiloxane group. By preference, they account for less than 30 per cent by weight.

In the case of diols, hydrocarbon groups include alkylene groups, such as ethylene glycol, or polymeric hydrocarbons, such as segments of polybutadiene containing two or more hydroxyl groups. An example of a polyether group is polyoxypropylene segment containing two or more hydroxyl groups.

Examples of hydroxyl groups-containing compounds that may be applied in the process referred to above are diols, triols and tetraols such as ethylene glycol, propylene glycol, poly(oxybutylene)glycol, poly(oxyethylene)glycol, poly(oxypropylene)diol, poly(oxypropylene)triol, poly(oxypropylene)tetrol, polybutadienediol, hydroxyl groups-containing polydimethylsiloxanes and combinations thereof such as block polymers of hydroxyl groups-containing poly(oxypropylene) and poly(oxyethylene). However, a polyol obtained by ethoxylation and/or propoxylation of, for instance, ethylene amine, glucose, fructose, saccharose and the like can also be used. Polyester polyols, such as caprolactone diol, can also be used.

The polyols described here mainly are polymeric polyols. The weight average molecular weight of these polyols is at least about 500, and generally ranges between about 1,000 and about 10,000, although molecular weights of between about 2,000 and about 8,000 are preferred. The polyol provides an elastomer segment in the polyamide to be prepared whilst the lactam polymerization provides the hard crystalline segment in the polyamide.

Polyamines for use in the process according to the present invention have at least two primary amine groups and are preferably selected from the group comprising polyoxyalkylene polyamines, polyalkadiene polyamines, polyalkene polyamines and combinations thereof.

The polyamine has an average molecular weight of between about 300 and about 10,000, preferably of between about 1,000 and about 8,000, and is selected so that the polyamine provides an elastomer segment in the polyamide to be prepared whilst the lactam polymerization provides the hard crystalline segment in the polyamide.

Elastomeric segments contribute to a glass transition temperature Tg lower than 0°C, preferably lower than -25°C, once they are incorporated in the nylon block copolymer. The glass transition temperature is determinable using differential scanning calorimetry under nitrogen at a scan speed of 10-20°C per minute.

According to the present process the amount of elastomeric segments in the nylon block copolymer can vary between about 2 and about 90 per cent by weight, more particularly between about 10 and about 60 per cent by weight, depending on the eventually desired properties.

Suitable polymeric hydrocarbon polyamines include, among others, polybutadiene diamine, polybutadiene polyamines and butadiene-acrylonitrile polyamines.

Suitable polyether polyamines include, among others, poly(oxybutylene)diamine, poly(oxyethylene)diamine, poly(oxypropylene)diamine, poly(oxypropylene)triamine, poly(oxypropylene) tetramine and combinations thereof such as block copolymers of poly(oxypropylene) and poly(oxyethylene) having at least two functional amine groups. The polyether polyamines most preferably employed are poly(oxypropylene)triamines having an average molecular weight of about 2,000 to about 6,000.

In the context of the present invention, term "lactam blocked polyisocyanates" means the reaction product of a polyisocyanate with a lactam, such as caprolactam. In principle, it is assumed that virtually all isocyanate groups have reacted with a lactam molecule, yielding the compound depicted by the formula: 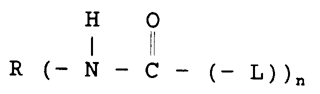
wherein:
-(-L) represents an unopened lactam ring,
R represents a multivalent organic residue which is alkyl, aralkyl, alkaryl or aryl, whether or not cyclic and can be any hydrocarbon group having at least two valence bonds for attachment to the 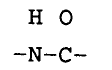
groups shown in the above formula. Examples include functional groups obtained by the removal of hydrogen atoms from methane, ethane, propane, hexane, heptane, octane, dodecane, benzene, toluene, xylene, naphthalene, cyclohexane and the like. The polyvalent R group can be of any size but is preferably limited to about twenty carbon atoms, and more preferably about ten carbon atoms. n represents a number greater than or equal to 2. Advantageously, the lactam ring can have from 5 to 12 carbon atoms.

In general, polyisocyanates having at least two isocyanate groups and 4-25 carbon atoms can be applied. By preference, aliphatic diisocyanates are used and include, for instance, 1,5-hexane diisocyanate and 1,6-hexane diisocyanate. Araliphatic, cycloaliphatic and aromatic isocyanates can also be used and include, for instance, isophorone diisocyanate, 2,4- and 2,6-toluene diisocyanate, 2,2-, 2,4- and 4,4-diphenyl methane diisocyanate (MDI) and polyphenylene polymethyelene polyisocyanates.

The reaction product of a polyol with a lactam blocked polyisocyanate is known to those skilled in the at. An exemplary process is described in EP-A-0135,233 which corresponds to U.S. Patent No. 4,540,516. The product prepared by that process is an N-substituted carbamoyl lactam compound. To prepare this compound, a polyol and a lactam blocked polyisocyanate in molten condition are reacted in the presence of a suitable catalyst, preferably a Lewis catalyst. The reaction is preferably carried out in molten lactam, and most preferably in molten caprolactam. When the reaction is allowed to proceed at a temperature between the melting point of the lactam and 150°C, compounds of, for instance, the following formula are formed: 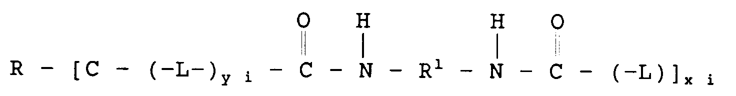
wherein:
- R: represents a multivalent polyether residue or multivalent hydrocarbon residue derived from a polyol of the formula R-(OH)_{x i}
- xi: represents an integer greater than or equal to 2
- R¹: represents an alkyl, aralkyl, alkaryl or aryl group, whether or not cyclic
- yi: represents an integer > 0
- (-L): represents an unopened lactam ring
- (-L-): represents an opened lactam block.
The R¹ can be any hydrocarbon group having at least two valence bonds for attachment to the 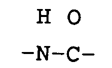
groups shown in the above formula. Examples include functional groups obtained by the removal of hydrogen atoms from methane, ethane, propane, hexane, heptane, octane, dodecane, benzene, toluene, xylene, naphthalene, cyclohexane and the like. The polyvalent R group can be of any size but is preferably limited to about twenty carbon atoms, and more preferably about ten carbon atoms.

From GB-1,067,153 and GB-1,099,265 it appears that urethane-like reaction products of polyalkene glycols and polyisocyanates may be applied as promotor. After preparation, the promotor is combined with molten lactam and an anionic catalyst (each having a temperature of 100°C). The mixture of molten lactam, catalyst and promotor (N-substituted carbomoyl lactam compound) is subsequently introduced into a mold having a temperature of 140-180°C, whereafter a nylon block copolymer is formed. As a condition to be met in the preparation of the promotor it is pointed out that the number of isocyanate groups in the amount of isocyanate applied exceeds the number of hydroxyl groups in the amount of polyol applied, so that the previously prepared promotor does not contain any hydroxyl groups. End products with a low or moderate impact resistance are obtained. The cause of this low impact resistance is attributable to a combination of factors. For instance, at the moment the reaction components are combined in the mold, the initial temperature of the components is so high that the nylon polymer is formed immediately. As a result inhomogeneous distribution of the polyol in the nylon matrix occurs.

The amount of polyol and/or polyamine applied in the present invention is about 2 to about 90% by wt., more particularly between about 10 to about 60% by wt., relative to the total amount of mixture prepared. The appropriate amount of polyol and/or polyamine is selected with the provision that the number of lactam blocked isocyanate groups in the amount of isocyanate applied exceeds the number of hydroxyl groups in the amount of polyol applied or the number of amine groups in the amount of polyamine applied. With this proviso, nylon block copolymers having a notch impact strength (Izod to ASTM D256) of 30-60 kJ/m at an elastomer content of 20 % wt. or more are faciley obtained. The block copolymer is formed in a short time, e.g. in less than 10 minutes, such as from 10 seconds to 5 minutes, under mild conditions as regards temperature and pressure.

The process is carried out with a combination of an alkali metal lactamate, such as sodium lactamate or potassium lactamate, and a Lewis acid. Suitable Lewis acids include, among others, bromomagnesium lactamate, magnesium bislactamate, magnesium acetylacetonate, magnesium salts of organic carboxylic acids such as magnesium stearate, magnesium chloride, calcium ethoxide, calcium lactamate, calcium acetylacetonate, barium lactamate, barium chloride, barium acetylacetonate, zinc chloride, zinc acetylacetonate, zinc lactamate, cadmium chloride, cadmium acetylacetonate, cadmium lactamate, borium acetylacetonate, aluminium trilactamate, aluminium chloride, chloroaluminium dilactamate, lactam aluminium chloride, tin(II)chloride, tin(II)ethoxide, tin(II)acetylacetonate, titanium trichloride, titanium(III)acetylacetonate, titanium(III)ethoxide, titanium trichloride, titanium(III)acetylacetonate, vanadium(III)ethoxide, vanadium (III)acetylacetonate, vanadium(III)chloride, chromium(III)chloride, chromium(III)acetylacetonate, iron(III)chloride, iron(III)acetylacetonate, iron(II)acetylacetonate, cobalt(II)chloride, cobalt(II)acetylacetonate, nickel acetylacetonate, nickel chloride, chromium(III)acetate, copper(II)acetylacetonate. By preference, the Lewis acid such as at least one magnesium bislactamate such as caprolactamate, and/or pyrrolidonate.

Lactams useful in the present process include, among others, caprolactam, laurinolactam, and when the process is conducted, the lactams are molten. In the preparation of the nylon block copolymer it may be essential to carry out the polymerization in the presence of one or more compounds normally applied in nylon block copolymers, such as fillers, softeners, flame retardants, stabilizers and reinforcing fibres such as carbon fibres or glass fibres.

The invention will now be further explained by the following non-limiting examples.

### Example I

In a storage vessel (A) of a RIM machine, a solution of polyether triol (128 grams, Caradol^{R} 36-3, MM 4640 g/mole, Shell), caprolactam adduct (27 grams) of 1,6-hexane diisocyanate and caprolactam (165 grams) was heated to 85°C.

In the catalyst vessel (B) of the RIM machine, a solution of sodium caprolactamate (3.2 grams of lactamate), magnesium dicaprolactamate (2.5 grams lactamate) and caprolactam (324 grams) was also heated to 85°C. A 1:1 mixture (200 grams) of the solutions from the vessels A and B was injected into a steel platen mold heated to 145°C. The mold was opened after 4 minutes.

In dry condition, the nylon block copolymer obtained, containing 20 % wt. polyether, had an IZOD notch impact strength of 35 kJ/m² and an E modulus (flexural) of 1340 N/mm².

### Example 2

In a storage vessel A of a RIM machine, a solution of polyether triol (80 grams, Caradol^{R} 36-3, MM 4640 g/mole, Shell), caprolactam adduct (20 grams) of 1,6-hexane diisocyanate and caprolactam (220 grams) was heated to 80°C.

In the catalyst vessel B of the RIM machine, a solution of potassium caprolactamate (8.5 grams lactamate), calcium chloride (1.8 grams) and caprolactam (320 grams) was also heated to 80°C.
A 1:1 mixture (200 grams) of the solutions from the vessels A and B was injected into a steel platen mold heated to 150°C. The mold was opened after 4 minutes.

In dry condition, the nylon block copolymer obtained, containing 12.5 % wt. polyether, had an IZOD notch impact strength of 13 kJ/m² and an E modulus (flexural) of 2250 N/mm².

## Claims

1. A process for preparing a nylon block copolymer comprising introducing at least two reaction streams having a temperature of 68-95°C into a mold having a temperature of 100-180°C, said reaction streams containing at least one lactam, at least one lactam blocked polyisocyanate and a catalyst wherein the catalyst and the polyisocyanate are in different reaction streams, and the catalyst-containing reaction stream contains sodium lactamate or potassium lactamate, and a Lewis acid, whereby a nylon block copolymer is obtained.

2. A process according to claim 1, wherein the nylon block copolymer contains about 2 to about 90 per cent by weight polyol and/or polyamine.

3. Process according to claim 1, wherein the nylon block copolymer contains about 10 to about 60 per cent by weight polyol and/or polyamine.

4. A process according to claim 2, wherein the nylon block copolymer contains about 10 to about 60% by wt. of polyol, polyamine, or polyol plus polyamine.

5. A process according to claim 1, wherein the polyisocyanate is at least one aliphatic diisocyanate.

6. A process according to claim 1, wherein the Lewis acid is magnesium bislactam.

7. A process according to claim 1, wherein the lactam is caprolactam.

8. An object comprising a nylon block copolymer obtained by the process according to claim 1.

9. A reaction-injection molding process for preparing a nylon block copolymer comprising injecting at least two heated reaction streams having a temperature of about 68°C to about 95°C into a mold heated to a temperature of about 100°C to about 180°C, said reaction streams containing at least one lactam, at least one lactam-blocked insocyanate and a catalyst, wherein the catalyst and the polyisocyanate are each in different reaction streams, and the catalyst-containing reaction stream contains at least one alkali metal lactamate selected from the groups consisting of sodium lactamate and potassium lactamate, and a Lewis acid, whereby a nylon block copolymer is obtained.
